# EUROPEAN PATENT SPECIFICATION

(11) **EP 2 381 724 B1**
(45) Date of publication and mention of the grant of the patent: **23.07.2014**
(21) Application number: 09832950.1
(22) Date of filing: 18.12.2009
(51) Int. Cl.: H04W 52/00, H04W 52/42, H04W 52/36, H04W 52/14, H04W 52/28, H04W 52/08, H04W 52/10, H04W 52/16, H04W 52/24

(54) **POWER CONTROL METHOD AND DEVICE FOR HIGH SPEED SHARED INFORMATION CHANNEL**
LEISTUNGSREGELUNGSVERFAHREN UND VORRICHTUNG FÜR HS-SICH
PROCÉDÉ ET DISPOSITIF DE COMMANDE DE PUISSANCE POUR CANAL D'INFORMATIONS PARTAGÉ HAUT DÉBIT

(30) Priority: 19.12.2008 CN 200810239859
(43) Date of publication of application: 26.10.2011
(73) Proprietor: China Academy of Telecommunications Technology, Haidian District Beijing 100191 (CN)
(72) Inventor: GUO, Baojuan, Beijing 100083 (CN); YANG, Yu, Beijing 100083 (CN)
(74) Representative: Tanty, François
(86) International application number: PCT/CN2009/075704
(87) International publication number: WO 2010/069268

(56) References cited:
- EP-A1- 1 850 503
- WO-A2-2007/024851
- WO-A2-2008/109162
- WO-A2-2008/112849
- CN-A- 1 750 428
- CN-A- 101 083 491
- CN-A- 101 207 416
- KR-A- 20040 016 330
- TS-WG1: "3rd Generation Partnership Project; Technical Specification Group Radio Access Network; Physical Layer procedures (TDD) (Release 7) v.7.9.0", 3GPP 3GPP RAN WG1, 18 December 2008 (2008-12-18), pages 1-71, XP002692510, Retrieved from the Internet: URL:www.3gpp.org [retrieved on 2013-02-20]
- "3rd Generation Partnership Project; Technical Specification Group Radio Access Network; High Speed Downlink Packet Access (HSDPA); Overall description; Stage 2 (Release 8)", 3GPP STANDARD; 3GPP TS 25.308, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.3.0, 1 September 2008 (2008-09-01), pages 1-56, XP050367609,

## Description

### Field of the Invention

The present invention relates to the field of the 3^{rd} generation (3G) mobile communications and particularly to a power control method and device for a High Speed-Shared Information Channel (HS-SICH).

### Background of the Invention

In order to satisfy a demand for a high speed mobile data service, a technology of High Speed Downlink Packet Access (HSDPA) has been proposed in the protocol of 3GPP R5 primarily for the purpose of supporting a high speed packet data service and a required high data transmission rate and obtaining a lower delay, a higher system throughout and a further guaranteed Quality of Service (QoS).

The HSDPA downlink involves two channels of a High Speed-Shared Control Channel (HS-SCCH) and a High Speed-Downlink Shared Channel (HS-DSCH), where downlink service data is carried over the HS-DSCH which is shared between a plurality of User Equipments (UE) through time division multiplexing and code division multiplexing and which may be mapped to more than one High Speed-Physical Downlink Shared Channel (HS-PDSCH); and scheduling and control information of the HS-DSCH is carried over the HS-SCCH, and a UE instructs demodulation and decoding of downlink data according to a result of decoding the HS-SCCH. The HSDPA uplink involves a High Speed-Shared Information Channel (HS-SICH) over which a UE feeds back a Channel Quality Indicator (CQI) of downlink quality information and an acknowledgement (ACK) or non-acknowledgement (NACK) message for transmission data upon reception of the HS-SCCH.

Hereinafter transmission of the carried scheduling and control information over the HS-SCCH will be referred simply to as transmission of the HS-SCCH and transmission of the carried feedback information over the HS-SICH will be referred simply to as transmission of the HS-SICH.

In present, power control for the HS-SICH is performed in a open-loop assisted with closed-loop mode as briefly described below.

When a UE transmits the HS-SICH for the first time after receiving the HS-SCCH for the first time, an invalid Transmit Power Control (TPC) command is carried over the HS-SCCH received for the first time and power can not be adjusted in response thereto, so open-loop power control shall be performed. Under the open-loop power control, a Radio Network Controller (RNC) configures desired reception power, and the UE adds its own measured value of a path loss to this desired value resulting in power at which the HS-SICH is transmitted under the open-loop power control. The RNC configures the desired reception power according to the 3GPP RS 25.331, and a detailed description thereof will be omitted here.

Since the HS-SICH is characterized in discrete scheduling, it is necessary to determine an interval between current transmission of the HS-SICH and previous transmission of the HS-SICH for the purpose of determining whether there is good correlation between the current transmission of the HS-SICH and the previous transmission of the HS-SICH. For this purpose of determination, firstly the RNC sets a transmission interval threshold of the HS-SICH dependent upon correlation of the radio control channels, and this set transmission interval threshold may also be adjusted dynamically by the RNC as needed.

Next, the UE compares a measured value of the transmission interval at which the UE transmits the HS-SICHs with the threshold, and if the measured value of the transmission interval at which the UE transmits the HS-SICHs is less than the threshold, it indicates good correlation between the current transmission of the HS-SICH and the previous transmission of the HS-SICH, and closed-loop power control may be performed, that is, the UE may adjust previous power in response to the TPC command carried over the currently received HS-SCCH, and if allowed over a network, add a further compensation value for a variation of the path loss; or if the measured value of the transmission interval at which the UE transmits the HS-SICHs is more than or equal to the threshold, it indicates poor correlation between the current transmission of the HS-SICH and the previous transmission of the HS-SICH, so open-loop power control shall be performed so as to guarantee the quality of the control channel, that is, the UE adds its own measured value of the path loss to the desired reception power configured by the RNC resulting in power at which the HS-SICH is transmitted under the open-loop power control.

Regardless of whether open-loop or closed-loop power control, if information carried over the currently transmitted HS-SICH is ACK information, a further power offset (Power Offset) configured by the RNC shall be added to power at which the HS-SICH is currently transmitted.

The foregoing power control for the HS-SICH in the prior art relates to such a case that information is fed back over the HS-SICH for only one code channel resource configuration, but a demand has emerged at present for switching between different code channel resource configurations for the HS-SICH. In an application of the technology of Multiple Input Multiple Output (MIMO) combined with the technology of HSDPA, for example, if downlink data in the existing HSDPA is regarded as one data stream (referred below to as a single stream), two concurrent downlink data streams (referred below to as dual streams) may be supported in combination with the mode of MIMO, and switching between single stream and dual streams will take place over time with a varying channel condition. Therefore, it is necessary for the UE to feed back information correspondingly in single stream and dual streams, and in this case, different code channel resources shall be configured for the HS-SICH and the HS-SICH shall be transmitted at different power. However, a solution to address this issue is absent in the existing power control method for the HS-SICH.

The article of "3rd Generation Partnership Project; Technical Specification Group Radio Access Network; Physical Layer procedures (TDD) (Release 7) v.7.9.0" discloses the standard solution for HS-SICH power control. In particular, the transmit power for HS-SICH is set by higher layers based on open loop power control. In the case that an ASK is being transmitted on the HS-SICH, the UE shall apply a power offset to the transmit power of the entire HS-SICH. This power offset shall be signaled by higher layers.

### Summary of the Invention

A first object of the invention is to provide a power control method for an HS-SICH in which an HS-SICH configured with a varying code channel resource can be provided with varying power.

A second object of the invention is to provide a power control device for an HS-SICH in which an HS-SICH configured with a varying code channel resource can be provided with varying power.

Technical solutions of the invention are defined in the claims.

Specifically, the power control method for an HS-SICH comprises: setting a first mode and a second mode, in which the HS-SICH is transmitted, with the first mode being corresponding to a first code channel resource and the second mode being corresponding to a second code channel resource; and setting a fixed proportion between power at which the HS-SICH is transmitted in the second mode and power at which the HS-SICH is transmitted in the first mode and deriving a first power offset from the fixed proportion, wherein the method further comprises: determining the power at which the HS-SICH is transmitted in the first mode for intended transmission of the HS-SICH; and adding the preset first power offset to. the determined power at which the HS-SICH is transmitted in the first mode resulting in the power at which the HS-SICH is transmitted in the second mode,wherein transmission, of the HS-SICH in the first mode is single-stream transmission of the HS-SICH and transmission of the HS-SICH in the second mode is dual-stream transmission of the HS-SICH.

The power control device for an HS-SICH comprises: a power offset determination module configured to derive a first power offsetfrom a set fixed proportion between power at which an HS-SICH is transmitted in a second mode and power at which the HS-SICH is transmitted in a first mode and transmit the first power offset to a power control module; and the power control module configured to determine the power at which the HS-SICH is transmitted in the first mode and add the first power offset to the determined power at which the HS-SICH is currently transmitted in the first mode resulting in the power at which the HS-SICH is transmitted in the second mode, wherein transmission of the HS-SICH in the first mode is single-stream transmission of the HS-SICH and transmission of the HS-SICH in the second mode is dual-stream transmission of the HS-SICH.

Apparently, a reference mode and an adjusting mode in which the HS-SICHs are transmitted are set and configured with different code channel resources, a fixed proportion is set between power at which the HS-SICH is transmitted in the adjusting mode and power at which the HS-SICH is transmitted in the reference mode, and a first power offset is derived from the fixed proportion. Each time the HS-SICH is intended to be transmitted, firstly the power at which the HS-SICH is currently transmitted in the reference mode, and if the HS-SICH is accurately intended to be transmitted in the reference mode, the HS-SICH is transmitted directly at the determined power; or if the HS-SICH is accurately intended to be transmitted in the adjusting mode, the first power offset is added to the determined power resulting in the power at which the HS-SICH is transmitted in the adjusting mode, thereby enabling provision of varying power for the HS-SICH configured with a varying code channel resource.

### Brief Description of the Drawings

Fig. 1 is a flow chart of an embodiment of a power control method for an HS-SICH according to the invention; and
Fig. 2 is a schematic structural diagram of a power control device for an HS-SICH according to an embodiment of the invention.

### Detailed Description of the Embodiments

The invention will be further described in details below with reference to the drawings and embodiments to make the objects and advantages of the invention more apparent.

In a power control method for an HS-SICH according to an embodiment of the invention, two modes are set in which HS-SICHs are transmitted, which may be referred respectively to as a reference mode and an adjusting mode configured with different code channel resources. Power at which the HS-SICH is transmitted in the adjusting mode is set at a fixed proportion to power at which the HS-SICH is transmitted in the reference mode, and a first power offset (delta) is derived from the fixed proportion.

In an embodiment of the invention, if the same performance is required to be achieved in the reference mode and the adjusting mode and there is a fixed proportion, denoted with a, of a code channel resource configured in the adjusting mode to that configured in the reference mode, there is the same fixed proportion, also denoted with a, of the amount of information carried in the adjusting mode to that carried in the reference mode, and the same fixed proportion, also denoted with a, shall also be set between power at which the HS-SICH is transmitted in the adjusting mode and power at which the HS-SICH is transmitted in the reference mode.

In order to perform power control for the HS-SICH in an embodiment of the invention under the foregoing conditions, firstly power at which the HS-SICH is currently transmitted in the reference mode is determined as reference power, and also several implementations in which power at which the HS-SICH is transmitted will be presented in the following embodiments; and secondly if the HS-SICH is currently transmitted in the reference mode, it may be transmitted directly at the determined power, or if the HS-SICH is currently transmitted in the adjusting mode, the first power offset (delta) is added to the determined power resulting in power at which the HS-SICH is transmitted in the adjusting mode, and the HS-SICH is transmitted at this power in the adjusting mode.

An embodiment of the power control method for the HS-SICH according to the invention will be presented in an application scenario as follows: the technology of MIMO is combined with the technology of HSDPA, the HS-SICH is transmitted in a single stream in the reference mode and in dual streams in the adjusting mode, where 8-bit single-stream feedback information including 1-bit ACK or NACK information, 6-bit TBS index information and 1-bit modulation mode information is carried over a first code channel resource with a spreading factor of 16 when the HS-SICH is intended to be transmitted in a single stream, and 16-bit dual-stream feedback information including 2-bit ACK or NACK information, 12-bit TBS index information and 2-bit modulation mode information is carried over a second code channel resource with a spreading factor of 8 when the HS-SICH is intended to be transmitted in dual streams.

Apparently, in the present embodiment, when the HS-SICH is transmitted in dual streams, the code channel resource is twice that in single-stream transmission and the amount of carried information is also twice that in single-stream transmission, for both of which the same fixed proportional relationship holds. As can be apparent from this, in order to achieve the same required performance in single-stream transmission and dual-stream transmission, power at which the HS-SICH is transmitted in dual streams shall also be twice power at which the HS-SICH is transmitted in a single stream, and the difference thereof which may be represented as 3dB in a general unit of power, so the first power offset (delta) in this embodiment may be 3dB. Of course, if a specific margin is required to be set in a practical application, this first power offset (delta) may alternatively be set as a value more than 3dB, and the margin may be determined dependent upon an implementation of the physical layer. Since the HS-SICH is transmitted in a single stream as in the prior art, the following flow of the method relates only to a flow of transmitting the HS-SICH in dual streams, and in a practical application, if the HS-SCCH is received in a single stream, the HS-SICH may be transmitted in a single stream as in the prior art, or if the HS-SCCH is received in dual streams, the HS-SICH may be transmitted in dual streams in the following flow of the method.

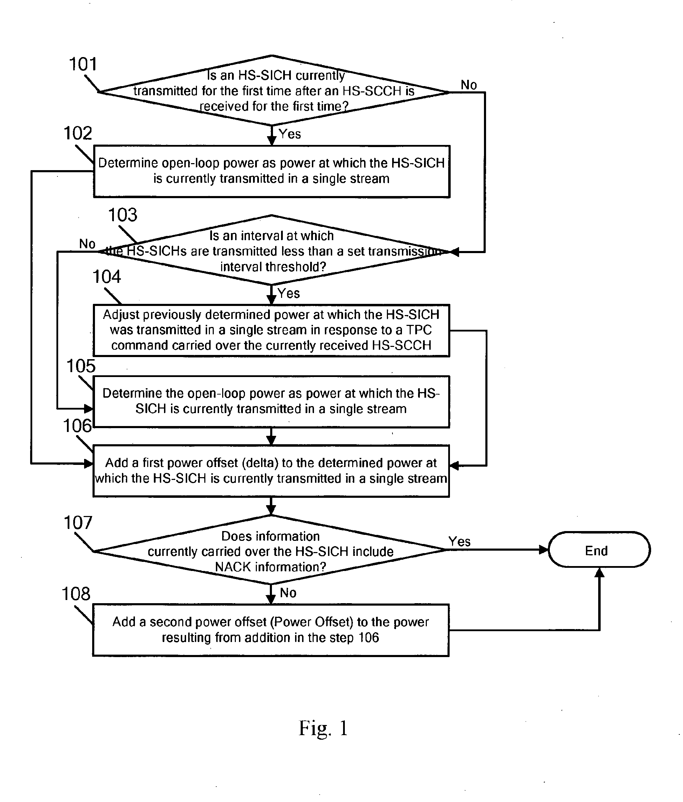

Fig. 1 is a flow chart of an embodiment of a power control method for an HS-SICH according to the invention, and the flow includes the following steps.

The step 101 is to determine whether an HS-SICH is currently transmitted for the first time after an HS-SCCH is received for the first time, and if so, the flow goes to the step 102; otherwise, the flow goes to the step 103.

The step 102 is to determine open-loop power as power at which the HS-SICH is currently transmitted in a single stream, and the flow goes to the step 106.

In this step, open-loop power is a sum of the desired reception power configured by the RNC and the path loss measured by the UE as in the prior art.

The step 103 is to determine whether an interval at which the HS-SICHs are transmitted is less than a set transmission interval threshold, and if so, the flow goes to the step 104; otherwise, the flow goes to the step 105.

In this step, if the HS-SICH currently transmitted is not after the HS-SCCH is received for the first time, an interval at which the HS-SICHs are transmitted shall be further determined, particularly by determining whether an interval between current transmission of the HS-SICH and previous transmission of the HS-SICH is less than the transmission interval threshold set by the RNC to thereby determine correlation between transmission of the HS-SICHs.

The step 104 is to adjust previously determined power at which the HS-SICH was transmitted in a single stream in response to a TPC command carried over the currently received HS-SCCH, and then the flow goes to the step 106.

In this step, the adjusted power is power at which the HS-SICH is currently transmitted in a single stream. The TPC command is generated from the previous HS-SICH at the transmission end of the HS-SCCH, and regardless of whether the previous HS-SICH is configured with a first code channel resource or a second code channel resource, the transmission end of the HS-SCCH may still comply with how a TPC command word is generated in the prior art, that is, it may measure a value of Signal to Noise Ratio (SNR), compare the measured value with a target value of SNR configured by the RNC and generate the TPC according to a comparison result. If allowed over a network, a compensation for a variation of the path loss may further be added in the closed-loop power control of this step.

The step 105 is to determine the open-loop power as power at which the HS-SICH is currently transmitted in a single stream.

The foregoing steps 101 to 105 have been described in this embodiment where power at which the HS-SICH is currently transmitted in a single stream is determined as reference power in a open-loop assisted with closed-loop mode. If the HS-SICH is currently transmitted in a single stream, the HS-SICH is transmitted directly at the determined power. Since single stream transmission of the HS-SICH is well known in the prior art, a detailed description thereof will be omitted here, and only dual-stream transmission of the HS-SICH will be described in details below.

The step 106 is to add a first power offset (delta) to the determined power at which the HS-SICH is currently transmitted in a single stream.

In this step, a set margin is further added if the margin is set dependent upon an implementation of the physical layer.

The step 107 is to determine whether information currently carried over the HS-SICH includes NACK information, and if so, the flow ends; otherwise, the flow goes to the step 108.

A power adjusting mechanism for ACK/NACK in the case that the HS-SICH is transmitted in dual streams has been presented in this step. Since information carried over the HS-SICH in dual-stream transmission is equivalent to two branches of feedback information, and if NACK information is included in one of the branches, inclusion of NACK information in the information currently carried over the HS-SICH is determined.

The step 108 is to add a second power offset (Power Offset) to the power resulting from addition in the step 106, and the flow ends.

In this step, the second power offset (Power Offset) is set by the RNC as in the prior art.

In order to perform the power control method for the HS-SICH according to the invention, the invention further proposes a power control device for an HS-SICH which is located at the UE side and which may be integrated in the UE or may be a separate device connected with the UE.

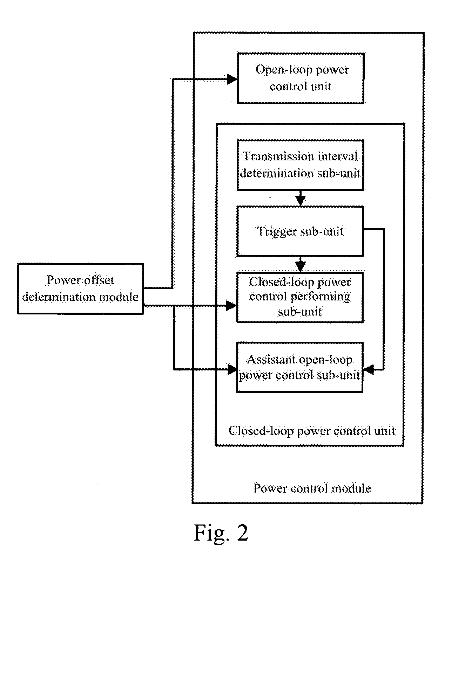

Fig. 2 is a schematic structural diagram of a power control device for an HS-SICH according to the invention, which includes a power offset determination module and a power control module.

The power offset determination module is configured to derive a first power offset from a set fixed proportion between power at which an HS-SICH is transmitted in an adjusting mode and power at which the HS-SICH is transmitted in a reference mode and transmit the first power offset to the power control module.

The power control module is configured to determine the power at which the HS-SICH is currently transmitted in the reference mode and add the first power offset to the determined power at which the HS-SICH is currently transmitted in the reference mode resulting in the power at which the HS-SICH is transmitted in the adjusting mode.

Alike, if the device according to the invention is applied in the scenario where the technology of MIMO is combined with the technology of HSDPA, transmission of the HS-SICH in the reference mode described in the device is single-stream transmission of the HS-SICH and transmission of the HS-SICH in the adjusting mode is dual-stream transmission of the HS-SICH. In this case, the power control module may also perform power control in the open-loop assisted with closed-loop mode. The power control module includes an open-loop power control unit and a closed-loop power control unit.

When the HS-SICH is currently transmitted for the first time after an HS-SCCH is received for the first time, the open-loop power control unit is configured to add a measured path loss to desired reception power configured by the RNC resulting in the power at which the HS-SICH is currently transmitted in a single stream and add the first power offset to the power at which the HS-SICH is currently transmitted in a single stream resulting in the power at which the HS-SICH is transmitted in dual streams. Furthermore, the open-loop power control unit may add a further margin set dependent upon an implementation of the physical layer together with the first power offset to the power at which the HS-SICH is currently transmitted in a single stream.

When the HS-SICH currently transmitted is not after the HS-SCCH is received for the first time, the closed-loop power control unit is configured to adjust previously determined power at which the HS-SICH was transmitted in a single stream to obtain the power at which the HS-SICH is currently transmitted in a single stream in response to a TPC command carried in the currently received HS-SCCH and add the first power offset to the adjusted power resulting in the power at which the HS-SICH is transmitted in dual streams.

In the case of closed-loop power control, if correlation between transmission of the HS-SICHs is taken into account, the closed-loop control unit includes a transmission interval determination sub-unit, a trigger sub-unit, a closed-loop power control performing sub-unit and an assistant open-loop power control sub-unit.

The transmission interval determination sub-unit is configured to determine, from a transmission interval threshold of the HS-SICH configured by the RNC, whether an interval between current transmission of the HS-SICH and previous transmission of the HS-SICH is more than or equal to the threshold.

The trigger sub-unit is configured to trigger the assistant open-loop power control sub-unit to operate when the transmission interval determination sub-unit determines that the interval between the current transmission of the HS-SICH and the previous transmission of the HS-SICH is more than or equal to the threshold and trigger the closed-loop power control performing sub-unit to operate when the transmission interval determination sub-unit determines that the interval between the current transmission of the HS-SICH and the previous transmission of the HS-SICH is less than the threshold.

The closed-loop power control performing sub-unit is configured to be triggered by the trigger sub-unit to adjust the previously determined power at which the HS-SICH is transmitted in a single stream to obtain the power at which the HS-SICH is currently transmitted in a single stream in response to the Transmission Power Control (TPC) command carried in the currently received HS-SCCH, add a compensation for a variation of the path loss if allowed over a network and add the first power offset to the adjusted power resulting in the power at which the HS-SICH is transmitted in dual streams.

The assistant open-loop power control sub-unit is configured to be triggered by the trigger sub-unit to add the measured path loss to the desired reception power configured by the RNC resulting in the power at which the HS-SICH is currently transmitted in a single stream and add the first power offset to the power at which the HS-SICH is currently transmitted in a single stream resulting in the power at which the HS-SICH is transmitted in dual streams. The assistant open-loop power control sub-unit may add a further margin set dependent upon an implementation of the physical layer together with the first power offset to the power at which the HS-SICH is currently transmitted in a single stream.

In order to perform the ACK/NACK mechanism in dual-stream transmission of the HS-SICH in the method, the power control device for the HS-SICH according to the invention may further include a carried information determination module configured to determine whether dual-stream feedback information currently carried over the HS-SICH includes NACK information, and if so, no operation is perfomed; otherwise, a further second power offset configured by the RNC is added to the power at which the HS-SICH is transmitted in dual streams as derived by the open-loop power control unit or the closed-loop power control unit resulting in resultant power at which the HS-SICH is transmitted in dual streams.

In conclusion, the foregoing is merely illustrative of the preferred embodiments of the invention but not intended to limit the scope of the invention. Any modifications, equivalent substitutions and adaptations made without departing from the scope and principle of the invention shall come into the scope of the invention, as defined by the appended claims.

## Claims

1. A power control method for a High Speed-Shared Information Channel, **characterized in that** the method comprises: setting a first mode and a second mode, in which the High Speed-Shared Information Channel, HS-SICH, is transmitted, with the first mode being corresponding to a first code channel resource and the second mode being corresponding to a second code channel resource; and setting a fixed proportion between power at which the HS-SICH is transmitted in the second mode and power at which the HS-SICH is transmitted in the first mode and deriving a first power offset from the fixed proportion, wherein the method further comprises:
determining the power at which the HS-SICH is transmitted in the first mode for intended transmission of the HS-SICH; and
adding the preset first power offset to the determined power at which the HS-SICH is transmitted in the first mode resulting in the power at which the HS-SICH is transmitted in the second mode (106),
- wherein transmission of the HS-SICH in the first mode is single-stream transmission of the HS-SICH and transmission of the HS-SICH in the second mode is dual-stream transmission of the HS-SICH.

2. The method of claim 1, wherein intended transmission of the HS-SICH is the HS-SICH being transmitted for the first time after a High Speed-Shared Control Channel, HS-SCCH, is received for the first time (101); and
determining the power at which the HS-SICH is transmitted in the first mode comprises: adding a measured value of a path loss to desired reception power configured by a Radio Network Controller, RNC, resulting in open-loop power and determining the open-loop power as the power at which the HS-SICH is transmitted in a single stream (102).

3. The method of claim 1, wherein intended transmission of the HS-SICH is other than transmission of the HS-SICH after an HS-SCCH is received for the first time (101); and
determining the power at which the HS-SICH is transmitted in the first mode comprises: adjusting previously determined power at which the HS-SICH was transmitted in a single stream to obtain the power at which the HS-SICH is currently transmitted in a single stream in response to a Transmission Power Control, TPC, command carried over the currently received HS-SCCH (104).

4. The method of claim 3, further comprising: before adjusting the previously determined power at which the HS-SICH was transmitted in a single stream (104),
determining whether a transmission interval between current transmission of the HS-SICH and previous transmission of the HS-SICH is more than or equal to a transmission interval threshold configured by an RNC (103); and
if so, adding a measured value of a path loss to desired reception power configured by the RNC resulting in open-loop power and determining the open-loop power as the power at which the HS-SICH is currently transmitted in a single stream (105);
otherwise, proceeding with the step of adjusting the previously determined power at which the HS-SICH was transmitted in a single stream(104).

5. The method of claim 4, further comprising: after adjusting the previously determined power at which the HS-SICH was transmitted in a single stream, adding a compensation value for a variation of a path loss to the adjusted power.

6. The method of claim 1, further comprising: after deriving the power at which the HS-SICH is transmitted in the second mode,
determining whether dual-stream feedback information carried over the HS-SICH comprises an NACK message(107); and
if so, performing no operation;
otherwise, adding a further second power offset configured by an RNC to the derived power at which the HS-SICH is transmitted in dual streams resulting in resultant power at which the HS-SICH is transmitted in dual streams (108).

7. The method of claim 1, wherein a further preset margin is added together with the first power offset to the power at which the HS-SICH is transmitted in the first mode.

8. A power control device for a High Speed-Shared Information Channel, **characterized in that** the device comprises:
a power offset determination module configured to derive a first power offset from a set fixed proportion between power at which an HS-SICH is transmitted in a second mode and power at which the HS-SICH is transmitted in a first mode and transmit the first power offset to a power control module; and
the power control module configured to determine the power at which the HS-SICH is transmitted in the first mode and add the first power offset to the determined power at which the HS-SICH is currently transmitted in the first mode resulting in the power at which the HS-SICH is transmitted in the second mode,
wherein transmission of the HS-SICH in the first mode is single-stream transmission of the HS-SICH and transmission of the HS-SICH in the second mode is dual-stream transmission of the HS-SICH

9. The device of claim 8, wherein the power control module comprises:
an open-loop power control unit, when the HS-SICH is transmitted for the first time after an HS-SCCH is received for the first time, configured to add a measured value of a path loss to desired reception power configured by an RNC resulting in open-loop power and determine the open-loop power as the power at which the HS-SICH is transmitted in a single stream, and add the first power offset to the power at which the HS-SICH is transmitted in a single stream resulting in the power at which the HS-SICH is transmitted in dual streams; and
a closed-loop power control unit, when the HS-SICH transmitted is not after the HS-SCCH is received for the first time, configured to adjust previously determined power at which the HS-SICH is transmitted in a single stream to obtain the power at which the HS-SICH is currently transmitted in a single stream in response to a Transmission Power Control, TPC, command carried in the currently received HS-SCCH and add the first power offset to the adjusted power resulting in the power at which the HS-SICH is transmitted in dual streams.

10. The device of claim 9, wherein the closed-loop control unit comprises:
a transmission interval determination sub-unit configured to determine, from a transmission interval threshold of the HS-SICH configured by an RNC, whether an interval between current transmission of the HS-SICH and previous transmission of the HS-SICH is more than or equal to the threshold;
a trigger sub-unit configured to trigger the assistant open-loop power control sub-unit to operate when the transmission interval determination sub-unit determines that the interval between the current transmission of the HS-SICH and the previous transmission of the HS-SICH is more than or equal to the threshold and trigger a closed-loop power control performing sub-unit to operate when the transmission interval determination sub-unit determines that the interval between the current transmission of the HS-SICH and the previous transmission of the HS-SICH is less than the threshold;
the closed-loop power control performing sub-unit configured to be triggered by the trigger sub-unit to adjust the previously determined power at which the HS-SICH is transmitted in a single stream to obtain the power at which the HS-SICH is currently transmitted in a single stream in response to the Transmission Power Control, TPC, command carried in the currently received HS-SCCH, and add the first power offset to the adjusted power resulting in the power at which the HS-SICH is transmitted in dual streams; and
the assistant open-loop power control sub-unit is configured to be triggered by the trigger sub-unit to add the measured value of the path loss to the desired reception power configured by the RNC resulting in the open-loop power and determine the open-loop power as the power at which the HS-SICH is transmitted in a single stream, and add the first power offset to the power at which the HS-SICH is transmitted in a single stream resulting in the power at which the HS-SICH is transmitted in dual streams.

11. The device of claim 10, wherein the closed-loop power control performing sub-unit is further configured to add a compensation value for a variation of the path loss to the adjusted power after adjusting the previously determined power at which the HS-SICH is transmitted in a single stream.

12. The device of claim 9, further comprising:
a carried information determination module configured to determine whether dualstream feedback information carried over the HS-SICH comprises NACK information, and if so, no operation is performed; otherwise, a further second power offset configured by the RNC is added to the power at which the HS-SICH is transmitted in dual streams as derived by the open-loop power control unit or the closed-loop power control unit resulting in resultant power at which the HS-SICH is transmitted in dual streams.

13. The device of claim 8, wherein the power control module is further configured to add a further preset margin together with the first power offset to the power at which the HS-SICH is transmitted in the reference mode.

## Patentansprüche

1. Leistungssteuerungsverfahren für einen Hochgeschwindigkeitskanal mit geteilten Informationen, **gekennzeichnet dadurch, dass** das Verfahren umfasst: Einrichten eines ersten und eines zweiten Modus, in denen der Hochgeschwindigkeitskanal mit geteilten Informationen, HS-SICH, übertragen wird, wobei der erste Modus einer ersten Code-Kanalressource entspricht und der zweite Modus einer zweiten Code-Kanalres-source entspricht; und Einrichten eines festen Verhältnisses zwischen der Leistung, mit der der HS-SICH im zweiten Modus übertragen wird, und der Leistung, mit der der HS-SICH im ersten Modus übertragen wird, und Ableiten eines ersten Leistungsversatzes aus dem festen Verhältnis, wobei das Verfahren ferner umfasst:
Bestimmen der Leistung, mit der der HS-SICH im ersten Modus für die beabsichtigte Übertragung des HS-SICH übertragen wird; und
Addieren des voreingestellten ersten Leistungsversatzes zu der bestimmten Leistung, mit der der HS-SICH im ersten Modus übertragen wird, wodurch sich die Leistung, mit der der HS-SICH im zweiten Modus übertragen wird, ergibt (106),
wobei die Übertragung des HS-SICH im ersten Modus eine Einzelstream-Übertragung des HS-SICH ist und die Übertragung des HS-SICH im zweiten Modus eine Dualstream-Übertragung des HS-SICH ist.

2. Verfahren nach Anspruch 1, wobei die beabsichtigte Übertragung des HS-SICH darin besteht, dass der HS-SICH zum ersten Mal übertragen wird, nachdem ein Hochgeschwindigkeitskanal mit geteilter Steuerung, HS-SCCH, zum ersten Mal empfangen wird (101); und
wobei das Bestimmen der Leistung, mit der der HS-SICH im ersten Modus übertragen wird, umfasst: Addieren eines gemessenen Pfadverlustwerts zur erwünschten Empfangsleistung, die von einer Funknetzwerksteuerung, RNC, eingerichtet ist, wodurch sich die Leistung für offene Schleifen ergibt und die Leistung für offene Schleifen als die Leistung bestimmt wird, mit der der HS-SICH in einem Einzelstream übertragen wird (102).

3. Verfahren nach Anspruch 1, wobei die beabsichtigte Übertragung des HS-SICH von der Übertragung des HS-SICH, nachdem ein HS-SCCH zum ersten Mal empfangen wird, verschieden ist (101); und
wobei das Bestimmen der Leistung, mit der der HS-SICH im ersten Modus übertragen wird, umfasst: Justieren der zuvor bestimmten Leistung, mit der der HS-SICH in einem Einzelstream übertragen wurde, um die Leistung zu erhalten, mit der der HS-SICH jetzt in einem Einzelstream übertragen wird, auf eine Übertragungsleistung-Steueranweisung, TPC, die über den jetzt empfangenen HS-SCCH geführt wird, hin (104).

4. Verfahren nach Anspruch 3, ferner umfassend: vor dem Justieren der zuvor bestimmten Leistung, mit der der HS-SICH in einem Einzelstream übertragen wurde (104),
Bestimmen, ob ein Übertragungsintervall zwischen der jetzigen Übertragung des HS-SICH und der vorherigen Übertragung des HS-SICH größer oder gleich einem von einer RNC eingerichteten Übertragungsintervallschwellwert ist (103); und
falls das so ist, Addieren eines gemessenen Pfadverlustwerts zu der von der RNC eingerichteten erwünschten Empfangsleistung, wodurch sich eine Leistung für offene Schleifen ergibt und die Leistung für offene Schleifen als die Leistung bestimmt wird, mit der der HS-SICH jetzt in einem Einzelstream übertragen wird (105);
anderenfalls Fortfahren mit der Justierung der zuvor bestimmten Leistung, mit der der HS-SICH in einem Einzelstream übertragen wurde (104).

5. Verfahren nach Anspruch 4, ferner umfassend: nach dem Justieren der zuvor bestimmten Leistung, mit der der HS-SICH in einem Einzelstream übertragen wurde, Addieren eines Kom-pensationswerts für eine Variation eines Pfadverlusts zur justierten Leistung.

6. Verfahren nach Anspruch 1, ferner umfassend: nach dem Herleiten der Leistung, mit der der HS-SICH im zweiten Modus übertragen wird,
Bestimmen, ob über den HS-SICH geführte Dualstream-Feed-backinformationen eine NACK-Nachricht umfassen (107); und
falls das so ist, keine Ausführung einer Operation;
anderenfalls Addieren eines von einer RNC eingerichteten weiteren zweiten Leistungsversatzes zur erwünschten Leistung, mit der der HS-SICH in Dualstreams übertragen wird, wodurch sich eine Ergebnisleistung, mit der der HS-SICH in Dualstreams übertragen wird, ergibt (108).

7. Verfahren nach Anspruch 1, wobei eine weitere voreingestellte Toleranz zusammen mit dem ersten Leistungsversatz zu der Leistung addiert wird, mit der der HS-SICH im ersten Modus übertragen wird.

8. Leistungssteuerungsgerät für einen Hochgeschwindigkeitskanal für geteilte Informationen, **gekennzeichnet dadurch, dass** das Gerät umfasst:
ein Leistungsversatz-Bestimmungsmodul, das dazu eingerichtet ist, einen ersten Leistungsversatz aus einem eingestellten festen Verhältnis zwischen der Leistung, mit der ein HS-SICH in einem zweiten Modus übertragen wird, und einer Leistung, mit der der HS-SICH in einem ersten Modus übertragen wird, herzuleiten und den ersten Leistungsversatz an ein Leistungssteuerungsmodul zu übertragen; und
das Leistungssteuerungsmodul, das dazu eingerichtet ist, die Leistung, mit der der HS-SICH im ersten Modus übertragen wird, zu bestimmen und den ersten Leistungsversatz zu der bestimmten Leistung, mit der der HS-SICH jetzt im ersten Modus übertragen wird, zu addieren, wodurch sich die Leistung, mit der der HS-SICH im zweiten Modus übertragen wird, ergibt,
wobei die Übertragung des HS-SICH im ersten Modus eine Einzelstream-Übertragung des HS-SICH und die Übertragung des HS-SICH im zweiten Modus eine Dualstream-Übertragung des HS-SICH ist.

9. Gerät nach Anspruch 8, wobei das Leistungssteuerungsmodul umfasst:
eine Leistungssteuerungseinheit für offene Schleifen, die, wenn der HS-SICH zum ersten Mal übertragen wird, nachdem ein HS-SCCH zum ersten Mal empfangen wird, dazu eingerichtet ist, einen gemessenen Pfadverlustwert zu der von einer RNC eingerichteten erwünschten Empfangsleistung zu addieren, wodurch sich eine Leistung für offene Schleifen ergibt und die Leistung für offene Schleifen als die Leistung, mit der der HS-SICH in einem Einzelstream übertragen wird, bestimmt wird, und dem ersten Leistungsversatz zu der Leistung, mit der der HS-SICH in einem Einzelstream übertragen wird, zu addieren, wodurch sich die Leistung ergibt, mit der der HS-SICH in Dualstreams übertragen wird; und
eine Leistungssteuerungseinheit für geschlossene Schleifen, die, wenn der übertragene HS-SICH nicht vorliegt, nachdem der HS-SCCH zum ersten Mal übertragen wird, dazu eingerichtet ist, die zuvor bestimmte Leistung, mit der der HS-SICH in einem Einzelstream übertragen wird, zu justieren, um die Leistung, mit der der HS-SICH jetzt in einem Einzelstream übertragen wird, auf eine Übertragungsleistungs-Steueranweisung, TPC, die im jetzt empfangenen HS-SCCH geführt wird, hin und den ersten Leistungsversatz zu der justierten Leistung zu addieren, wodurch sich die Leistung ergibt, mit der der HS-SICH in Dualstreams übertragen wird.

10. Gerät nach Anspruch 9, wobei die Steuereinheit für geschlossene Schleifen umfasst:
eine Untereinheit zur Bestimmung von Übertragungsintervallen, die dazu eingerichtet ist, aus einem von einer RNC eingerichteten Übertragungsintervallschwellwert des HS-SICH zu bestimmen, ob ein Intervall zwischen der jetzigen Übertragung des HS-SICH und der vorherigen Übertragung des HS-SICH größer oder gleich dem Schwellwert ist;
eine Ansteuerungsuntereinheit, die dazu eingerichtet ist, die unterstützende Leistungssteuerungs-Untereinheit für offene Schleifen in Betrieb zu setzen, wenn die Untereinheit zur Bestimmung von Übertragungsintervallen bestimmt, dass das Intervall zwischen der jetzigen Übertragung des HS-SICH und der vorherigen Übertragung des HS-SICH größer oder gleich dem Schwellwert ist, und eine Untereinheit zur Ausführung von Leistungssteuerung für geschlossene Schleifen in Betrieb zu setzen, wenn die Untereinheit zur Bestimmung von Übertragungsintervallen bestimmt, dass das Intervall zwischen der jetzigen Übertragung des HS-SICH und der vorherigen Übertragung des HS-SICH kleiner als der Schwellwert ist;
die Untereinheit zur Ausführung von Leistungssteuerung für geschlossene Schleifen, die dazu eingerichtet ist, von der Ansteuerungsuntereinheit angesteuert zu werden, um die zuvor bestimmte Leistung, mit der der HS-SICH in einem Einzelstream übertragen wird, zu justieren, um die Leistung, mit der der HS-SICH jetzt in einem Einzelstream übertragen wird, zu erhalten, auf die im jetzt empfangenen HS-SCCH geführte Übertragungsleistungs-Steuerungsanweisung, TPC, hin und den ersten Leistungsversatz zur justierten Leistung zu addieren, wodurch sich die Leistung, mit der der HS-SICH in Dualstreams übertragen wird, ergibt; und
wobei die unterstützende Leistungssteuerungs-Untereinheit für offene Schleifen dazu eingerichtet ist, von der Ansteuerungsuntereinheit angesteuert zu werden, um den gemessenen Pfadverlustwert zu der von der RNC eingerichteten erwünschten Empfangsleistung zu addieren, wodurch sich die Leistung für offene Schleifen ergibt, und die Leistung für offene Schleifen als die Leistung, mit der der HS-SICH in einem Einzelstream übertragen wird, zu bestimmen und den ersten Leistungsversatz zu der Leistung, mit der der HS-SICH in einem Einzelstream übertragen wird, zu addieren, wodurch sich die Leistung ergibt, mit der der HS-SICH in Dualstreams übertragen wird.

11. Gerät nach Anspruch 10, wobei die Untereinheit zur Ausführung von Leistungssteuerung für geschlossene Schleifen ferner dazu eingerichtet ist, einen Kompensationswert für eine Variation des Pfadverlusts zur justierten Leistung nach dem Justieren der zuvor bestimmten Leistung, mit der der HS-SICH in einem Einzelstream übertragen wird, zu addieren.

12. Gerät nach Anspruch 9, ferner umfassend:
ein Bestimmungsmodul für geführte Informationen, das dazu eingerichtet ist, zu bestimmen, ob über den HS-SICH geführte Dualstream-Feedbackinformationen NACK-Informationen umfassen, wobei falls das so ist, keine Operation ausgeführt wird; anderenfalls, ein von der RNC eingerichteter weiterer zweiter Leistungsversatz zu der Leistung, mit der der HS-SICH in Dualstreams übertragen wird, wie von der Leistungssteuerungseinheit für offene Schleifen oder der Leistungssteuerungseinheit für geschlossene Schleifen hergeleitet, addiert wird, wodurch sich die Ergebnisleistung, mit der der HS-SICH in Dualstreams übertragen wird, ergibt.

13. Gerät nach Anspruch 8, wobei das Leistungssteuerungsmodul ferner dazu eingerichtet ist, eine weitere voreingestellte Toleranz zusammen mit dem ersten Leistungsversatz zu der Leistung, mit der der HS-SICH im Referenzmodus übertragen wird, zu addieren.

## Revendications

1. Procédé de commande de puissance pour un canal d'informations partagé haut débit, **caractérisé en ce que** le procédé consiste à : définir un premier mode et un second mode, dans lequel le canal d'informations partagé haut débit, HS-SICH, est transmis, dans lequel le premier mode correspond à une première ressource de canal de code et le second mode correspond à une seconde ressource de canal de code ; et définir une proportion fixe entre la puissance à laquelle le canal HS-SICH est transmis dans le second mode et la puissance à laquelle le canal HS-SICH est transmis dans le premier mode, et dériver un premier décalage de puissance relativement à la proportion fixe, dans lequel le procédé consiste en outre à :
déterminer la puissance à laquelle le canal HS-SICH est transmis dans le premier mode pour une transmission prévue du canal HS-SICH ; et
ajouter le premier décalage de puissance prédéfini à la puissance déterminée à laquelle le canal HS-SICH est transmis dans le premier mode, ce qui se traduit par la puissance à laquelle le canal HS-SICH est transmis dans le second mode (106) ;
dans lequel la transmission du canal HS-SICH dans le premier mode correspond à une transmission à flux unique du canal HS-SICH, et la transmission du canal HS-SICH dans le second mode correspond à une transmission à deux flux du canal HS-SICH.

2. Procédé selon la revendication 1, dans lequel la transmission prévue du canal HS-SICH est celle où le canal HS-SICH est transmis pour la première fois après qu'un canal de commande partagé haut débit, HS-SCCH, est reçu pour la première fois (101) ; et
l'étape consistant à déterminer la puissance à laquelle le canal HS-SICH est transmis dans le premier mode consiste à : ajouter une valeur mesurée d'une perte de chemin à une puissance de réception souhaitée configurée par un contrôleur de réseau radio, RNC, ce qui se traduit par une puissance à boucle ouverte, et déterminer la puissance à boucle ouverte comme étant la puissance à laquelle le canal HS-SICH est transmis dans un flux unique (102).

3. Procédé selon la revendication 1, dans lequel la transmission prévue du canal HS-SICH est distincte de la transmission du canal HS-SICH après qu'un canal HS-SCCH est reçu pour la première fois (101) ; et
l'étape consistant à déterminer la puissance à laquelle le canal HS-SICH est transmis dans le premier mode consiste à : ajuster une puissance préalablement déterminée à laquelle le canal HS-SICH a été transmis dans un flux unique, en vue d'obtenir la puissance à laquelle le canal HS-SICH est à cet instant transmis dans un flux unique, en réponse à une commande de contrôle de puissance de transmission, TPC, transportée sur le canal HS-SCCH reçu en cours (104).

4. Procédé selon la revendication 3, consistant en outre à : avant d'ajuster la puissance préalablement déterminée à laquelle le canal HS-SICH a été transmis dans un flux unique (104) :
déterminer si un intervalle de transmission entre une transmission en cours du canal HS-SICH et une transmission précédente du canal HS-SICH est supérieur ou égal à un seuil d'intervalle de transmission configuré par un contrôleur RNC (103) ; et
le cas échéant, ajouter une valeur mesurée d'une perte de chemin à une puissance de réception souhaitée configurée par le contrôleur RNC, ce qui se traduit par une puissance à boucle ouverte, et déterminer la puissance à boucle ouverte comme étant la puissance à laquelle le canal HS-SICH est à cet instant transmis dans un flux unique (105) ;
sinon, passer à l'étape d'ajustement de la puissance préalablement déterminée à laquelle le canal HS-SICH a été transmis dans un flux unique (104).

5. Procédé selon la revendication 4, consistant en outre à : suite à l'ajustement de la puissance préalablement déterminée à laquelle le canal HS-SICH a été transmis dans un flux unique, ajouter une valeur de compensation pour une variation d'une perte de chemin, à la puissance ajustée.

6. Procédé selon la revendication 1, consistant en outre à : suite à la dérivation de la puissance à laquelle le canal HS-SICH est transmis dans le second mode :
déterminer si des informations de rétroaction à deux flux transportées sur le canal HS-SICH comportent un message d'accusé de non-réception, NACK, (107) ; et
le cas échéant, ne mettre en oeuvre aucune opération ;
sinon, ajouter un second décalage de puissance supplémentaire configuré par un contrôleur RNC à la puissance dérivée à laquelle le canal HS-SICH est transmis dans deux flux, ce qui se traduit par une puissance résultante à laquelle le canal HS-SICH est transmis dans deux flux (108).

7. Procédé selon la revendication 1, dans lequel une marge prédéfinie supplémentaire est ajoutée, conjointement avec le premier décalage de puissance, à la puissance à laquelle le canal HS-SICH est transmis dans le premier mode.

8. Dispositif de commande de puissance pour un canal d'informations partagé haut débit, **caractérisé en ce que** le dispositif comprend :
un module de détermination de décalage de puissance configuré de manière à dériver un premier décalage de puissance relativement à une proportion fixe définie entre une puissance à laquelle un canal HS-SICH est transmis dans un second mode et une puissance à laquelle le canal HS-SICH est transmis dans un premier mode, et à transmettre le premier décalage de puissance à un module de commande de puissance ; et
le module de commande de puissance est configuré de manière à déterminer la puissance à laquelle le canal HS-SICH est transmis dans le premier mode, et à ajouter le premier décalage de puissance à la puissance déterminée à laquelle le canal HS-SICH est transmis à cet instant dans le premier mode, ce qui se traduit par la puissance à laquelle le canal HS-SICH est transmis dans le second mode ;
dans lequel la transmission du canal HS-SICH dans le premier mode correspond à une transmission à flux unique du canal HS-SICH, et la transmission du canal HS-SICH dans le second mode correspond à une transmission à deux flux du canal HS-SICH.

9. Dispositif selon la revendication 8, dans lequel le module de commande de puissance comprend :
une unité de commande de puissance à boucle ouverte, lorsque le canal HS-SICH est transmis pour la première fois après qu'un canal HS-SCCH est reçu pour la première fois, configurée de manière à ajouter une valeur mesurée d'une perte de chemin à une puissance de réception souhaitée configurée par un contrôleur RNC, ce qui se traduit par une puissance à boucle ouverte, et à déterminer la puissance à boucle ouverte comme étant la puissance à laquelle le canal HS-SICH est transmis dans un flux unique, et à ajouter le premier décalage de puissance à la puissance à laquelle le canal HS-SICH est transmis dans un flux unique, ce qui se traduit par la puissance à laquelle le canal HS-SICH est transmis dans deux flux ; et
une unité de commande de puissance à boucle fermée, lorsque le canal HS-SICH transmis n'est pas transmis après que le canal HS-SCCH est reçu pour la première fois, configurée de manière à ajuster une puissance préalablement déterminée à laquelle le canal HS-SICH est transmis dans un flux unique, en vue d'obtenir la puissance à laquelle le canal HS-SICH est à cet instant transmis dans un flux unique, en réponse à une commande de contrôle de puissance de transmission, TPC, mise en oeuvre dans le canal HS-SCCH reçu en cours, et à ajouter le premier décalage de puissance à la puissance ajustée, ce qui se traduit par la puissance à laquelle le canal HS-SICH est transmis dans deux flux.

10. Dispositif selon la revendication 9, dans lequel l'unité de commande de puissance à boucle fermée comprend :
une sous-unité de détermination d'intervalle de transmission configurée de manière à déterminer, à partir d'un seuil d'intervalle de transmission du canal HS-SICH configuré par un contrôleur RNC, si un intervalle entre une transmission en cours du canal HS-SICH et une transmission précédente du canal HS-SICH est supérieur ou égal au seuil ;
une sous-unité de déclenchement configurée de manière à déclencher le fonctionnement de la sous-unité d'assistance de commande de puissance à boucle ouverte lorsque la sous-unité de détermination d'intervalle de transmission détermine que l'intervalle entre la transmission en cours du canal HS-SICH et la transmission précédente du canal HS-SICH est supérieur ou égal au seuil, et à déclencher le fonctionnement d'une sous-unité de mise en oeuvre de commande de puissance à boucle fermée lorsque la sous-unité de détermination d'intervalle de transmission détermine que l'intervalle entre la transmission en cours du canal HS-SICH et la transmission précédente du canal HS-SICH est inférieur au seuil ;
la sous-unité de mise en oeuvre de commande de puissance à boucle fermée étant configurée de manière à être déclenchée par la sous-unité de déclenchement en vue d'ajuster la puissance préalablement déterminée à laquelle le canal HS-SICH est transmis dans un flux unique, afin d'obtenir la puissance à laquelle le canal HS-SICH est à cet instant transmis dans un flux unique, en réponse à la commande de contrôle de puissance de transmission, TPC, mise en oeuvre dans le canal HS-SCCH reçu en cours, et d'ajouter le premier décalage de puissance à la puissance ajustée, ce qui se traduit par la puissance à laquelle le canal HS-SICH est transmis dans deux flux ; et
la sous-unité d'assistance de commande de puissance à boucle ouverte est configurée de manière à être déclenchée par la sous-unité de déclenchement en vue d'ajouter la valeur mesurée de la perte de chemin à la puissance de réception souhaitée configurée par le contrôleur RNC, ce qui se traduit par la puissance à boucle ouverte, et de déterminer la puissance à boucle ouverte comme étant la puissance à laquelle le canal HS-SICH est transmis dans un flux unique, et d'ajouter le premier décalage de puissance à la puissance à laquelle le canal HS-SICH est transmis dans un flux unique, ce qui se traduit par la puissance à laquelle le canal HS-SICH est transmis dans deux flux.

11. Dispositif selon la revendication 10, dans lequel la sous-unité de mise en oeuvre de commande de puissance à boucle fermée est en outre configurée de manière à ajouter une valeur de compensation pour une variation de la perte de chemin à la puissance ajustée, suite à l'ajustement de la puissance préalablement déterminée à laquelle le canal HS-SICH est transmis dans un flux unique.

12. Dispositif selon la revendication 9, comprenant en outre :
un module de détermination d'informations transportées configuré de manière à déterminer si des informations de rétroaction à deux flux transportées sur le canal HS-SICH comportent des informations d'accusé de non-réception, NACK, et dans lequel, le cas échéant, aucune opération n'est mise en oeuvre ; sinon, un second décalage de puissance supplémentaire configuré par le contrôleur RNC est ajouté à la puissance à laquelle le canal HS-SICH est transmis dans deux flux, telle que dérivée par l'unité de commande de puissance à boucle ouverte ou l'unité de commande de puissance à boucle fermée, ce qui se traduit par une puissance résultante à laquelle le canal HS-SICH est transmis dans deux flux.

13. Dispositif selon la revendication 8, dans lequel le module de commande de puissance est en outre configuré de manière à ajouter une marge prédéfinie supplémentaire, conjointement avec le premier décalage de puissance, à la puissance à laquelle le canal HS-SICH est transmis dans le mode de référence.
